# EUROPEAN PATENT SPECIFICATION

(11) **EP 1 930 227 B1**
(45) Date of publication and mention of the grant of the patent: **13.02.2013**
(21) Application number: 07122181.6
(22) Date of filing: 03.12.2007
(51) Int. Cl.: B61F 19/04, B61D 15/06, B60R 19/34

(54) **Obstacle deflector for a front carriage of a train**
Hindernisabweiser für den Frontwagen eines Zuges
Déflecteur d'obstacle pour le wagon avant d'un train

(30) Priority: 04.12.2006 IT TO20060862
(43) Date of publication of application: 11.06.2008
(73) Proprietor: ANSALDOBREDA S.p.A., 80147 Napoli (IT)
(72) Inventor: Duella, Renzo, 28021 Borgomanero (IT); Raiti Stefano, 55049 Viarreggio (LU) (IT)
(74) Representative: Jorio, Paolo

(56) References cited:
- EP-A- 1 251 054
- WO-A-2005/028275
- DE-A1- 4 401 865
- GB-A- 2 340 461
- JP-A- 2005 022 598
- US-A- 3 734 554
- US-A- 6 062 634

## Description

The present invention concerns an obstacle deflector for a front carriage of a train.

On trains, it is known to provide an obstacle deflector connected to a load-carrying frame of the front carriage and comprising a substantially vertical front wall, which normally has a wedge or arc-like shape in plan view and is placed in a position adjacent to the railway track to laterally deflect relatively low obstacles that might be encountered in front of the train whilst travelling. By way of example, in cases where snow needs to be laterally deflected, the obstacle deflectors are defined by snowploughs.

There is the need to laterally deflect obstacles of relatively high mass as well, for example, cows, cars, etc., to avoid derailment of the train's carriages in case of head-on collision. To meet this need, it is known to make the front wall of the deflector plastically deformable to absorb impact energy, such as in the solution shown in EP-A-1468890 for example. In this solution, the arc of the front wall defines a horseshoe-like shape and comprises two side portions coupled to an upper support member via a plurality of connection members. The rear face of an intermediate portion of the front wall is also connected to a deformable tube that extends along the longitudinal axis of the train.

There is the need to improve the above-described known solutions, in order to absorb impact energy in a wide range of situations, with regards to impact speed, the type of obstacle with which collision takes place, as well as the position of this obstacle with respect to the longitudinal axis of the train. In particular, the deflector must have limited weight (for example, less than 250 kg) and low manufacturing costs.

DE 4401865 A1 discloses a bumper, which includes a bumper bar and mechanical deformation elements arranged between the bar and longitudinal supports of the vehicle. The mechanical deformation elements are provided with laterally opposite local strength reductions, which define a perpendicular "bending axis" in the deformation elements.

WO 2005028275 A1 discloses a cover structure, which is designed to engage pedestrians in order to prevent pedestrians from entering beneath the vehicle in case of accident. The cover structure is configured for attachment to one end of a vehicle, and is designed to deform elastically when impact energy is exerted thereon. The cover structure is attached indirectly to a frame at the end of the vehicle, via a pair of low force energy absorption elements.

The object of the present invention is that of embodying an obstacle deflector for a front carriage of a train that allows the above-presented needs to be met in a simple and economic manner.

According to the present invention, a front carriage of a train is provided as defined in claim 1.

The invention shall now be described with reference to the enclosed drawings, which illustrate a non-limitative embodiment, where:
- Figure 1 shows, in perspective, a preferred embodiment of front carriage of a train, according to the present invention, with an obstacle deflector;
- Figure 2 shows the obstacle deflector of Figure 1 on a larger-scale, without the parts related to the front carriage,
- Figure 3 is a rear-bottom prospective view of the obstacle deflector of Figure 1,
- Figure 4 shows an exploded view of the obstacle deflector of Figure 2, and
- Figures 5 and 6 are large-scale cross-sections of a detail of the obstacle deflector made along the planes V-V and VI-VI respectively, in Figure 4.

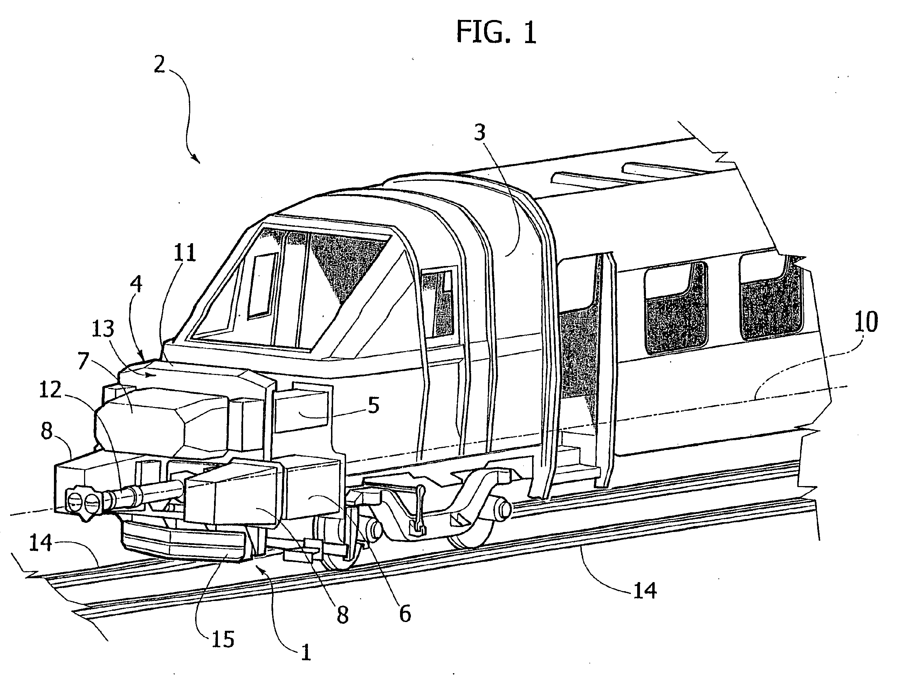

In Figure 1, reference numeral 1 indicates an obstacle deflector constituting part of a front carriage 2 of a train. In particular, the front carriage 2 comprises a load-carrying frame 3, or body, and a front structure 4 carried by the frame 3 to absorb impact energy in case of head-on collision. The front carriage 2 is shown without the body or aerodynamic outer skin that covers the frame 3 and at least the upper part of the front structure 4.

The front structure 4 comprises, in addition to the deflector 1, a plurality of elements 5, 6, 7 and 8, that absorb energy by plastically deforming in case of collision. The front structure 4 is symmetrical with respect to an ideal vertical plane on which a longitudinal axis 10 of the train lies and comprises a transverse support portal or plate 11 spaced out along axis 10 from the frame 3. The plate 11 is relatively rigid in case of collision, is coupled to the frame 3 by elements 5 and 6, is crossed by an automatic coupler 12 (not described in detail) that extends along axis 10, and has a front face 13 that carries elements 7 and 8 and the deflector 1.

The deflector 1 is made of steel and is intended to move any obstacles that the train unexpectedly find in front of it on the railway track 14 to the sides, protect the bottom part of the entire train, avoiding derailment, and is able to absorb energy by plastically deforming in case of heavy impacts. The deflector 1 has a maximum bulk or overhang of 500 mm along axis 10 with respect to plate 11, a maximum height of 319.5 mm (in particular, approximately 306 mm), a maximum transverse width of 2000 mm (in particular, approximately 1630 mm), and is adjacent to the railway track 14 (in particular, the distance is approximately 265 mm).

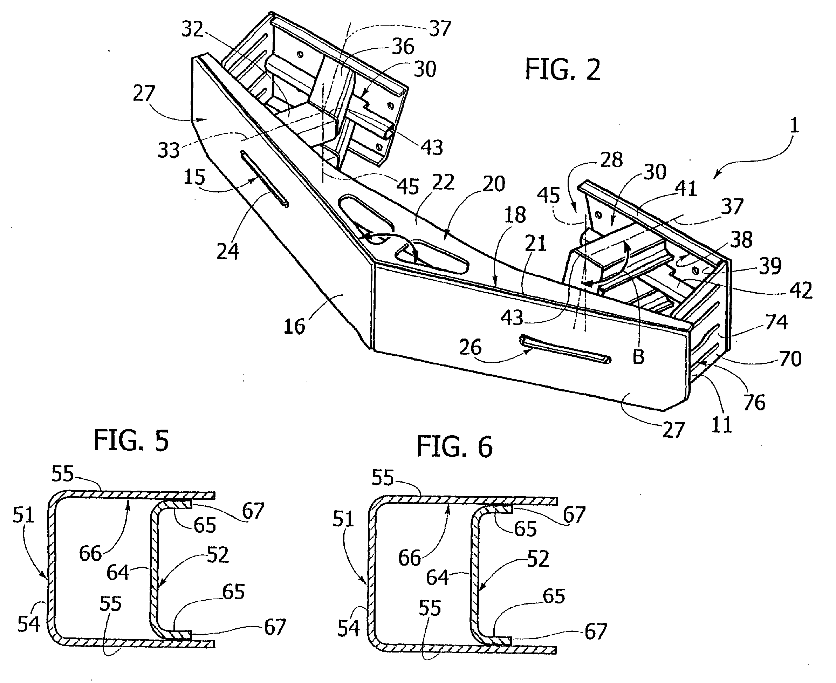

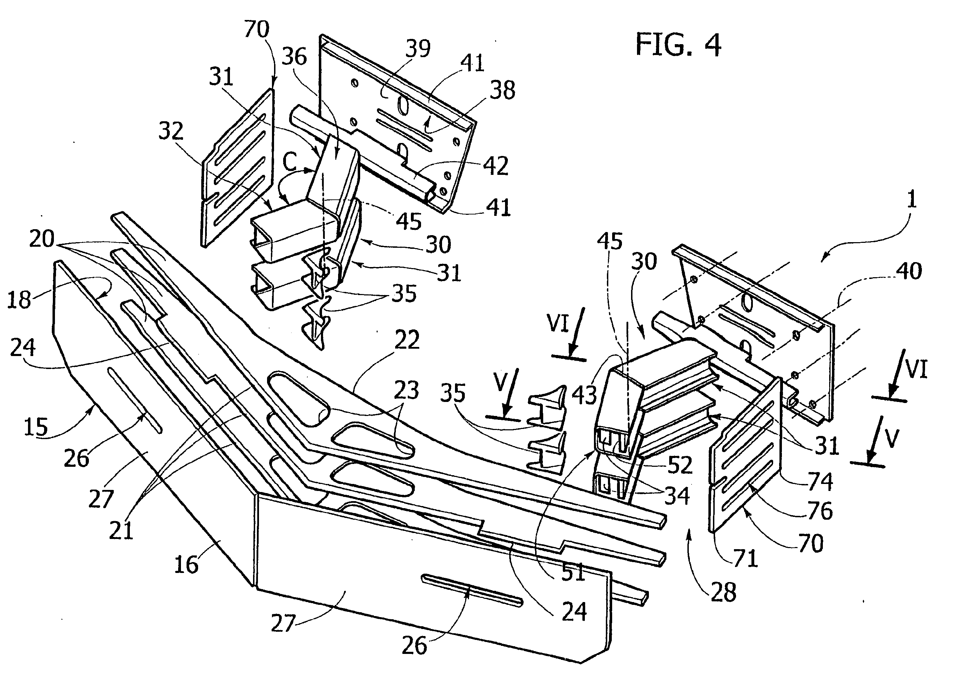

With reference to Figures 2 and 4, the deflector 1 comprises a front wall or blade 15, which is substantially vertical and normally has a wedge or V-like shape in plan view, so as to have a central portion that forms an angle A (Figure 2) of approximately 140°. Wall 15 has a rear face 18 reinforced by a plurality of mutually parallel transverse walls 20. Walls 20 have a substantially triangular shape in plan view, extend across the entire width of face 18 and comprise a front profile or edge 21, which has a complementary shape and is fixed to face 18 (particularly by welding). In particular, each wall 20 has a related central portion 22 that defines a support for portion 16 and is equipped with two weight-reducing apertures 23 defined by a closed perimeter. The edge 21 of one of the walls 20 (the centre one) comprises two appendages 24, which engage with respective horizontal slots 26 made in the respective lateral portions 27 of wall 15.

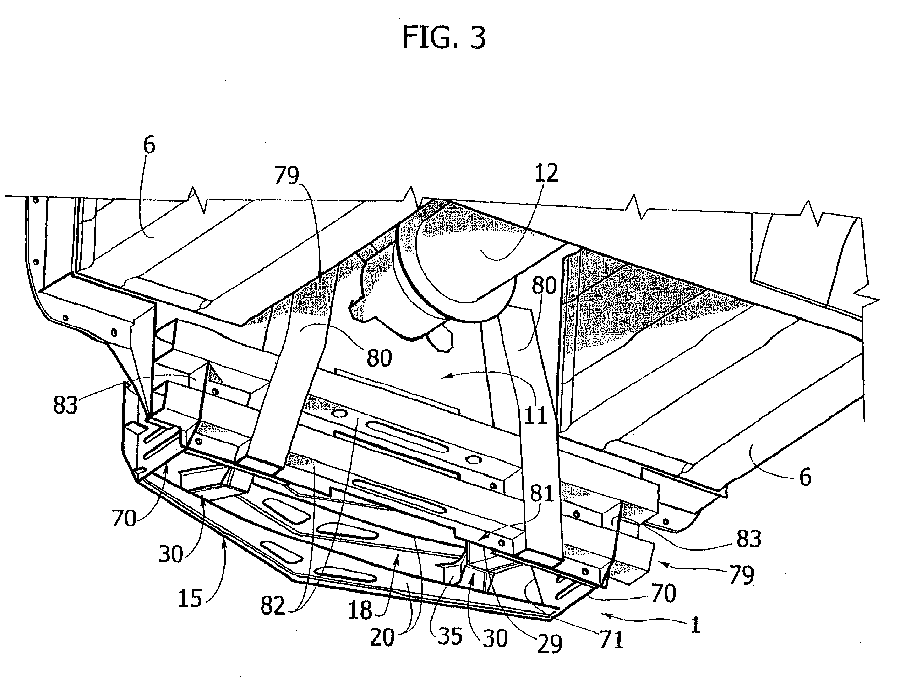

Portions 27 are coupled via a connection assembly 28 to a bottom end portion 29 of plate 11 (Figure 3), while portion 16 is devoid of connections to plate 11 (except for walls 20, the longitudinal space between portions 29 and 16 is free).

The assembly 28 comprises two plastically deformable devices 30, each of which is defined by as associated pair of mutually parallel boxed members 31. The members 31 comprise respective front portions 32, which are inserted vertically between the walls 20, extend along respective axes 33 substantially horizontal and orthogonal to portions 27 beginning from face 18, and have their ends coupled in fixed positions, by welding for example, to portions 27. Vertical reinforcement elements 34 are coupled in fixed positions on the inside of portions 32 in order to limit deformation due to static central loads. The angular reinforcement elements 35 are coupled in fixed positions, to the outside of portions 32 and to face 18, to strengthen the connection zones.

In addition, members 31 comprise respective rear end portions 36, which extend along respective axes 37 and have their ends coupled in fixed positions, by welding for example, to the front face 38 of two vertical connection plates 39.

The plates 39 are transversely spaced apart from each other, resting against face 13 and are fixed to portion 29, for example, by screws (of which only the axis is indicated by reference numeral 40). The plates 39 have top and bottom reinforcement ribbing 41 and are also strengthened by additional bars 42, which have a C-shaped cross-section, are welded to face 38, are horizontal and inserted between portions 36.

The devices 30 are mutually symmetrical with respect to an ideal longitudinal-vertical plane and define respective bending hinges 43 in case of plastic deformation during the collision: in other words, members 31 can bend around ideal or virtual axes 45 in intermediate zones between portions 32 and 36. In particular, the axes 45 of the two hinges 43 are vertical and are defined by the fact that axes 33 and 37 form an angle B (Figure 2) with each other that is not 180° (in particular, equal to 129°), the concavity of which faces outwards.

The portions 32 and 36 of each member 31 are welded to each other in coupling zones defining the relevant hinge 43 and, as shown in Figures 5 and 6, are formed by elements 51 and 52 with C-shaped cross-sections (Figures 5 and 6). In each portion 32 and 36, element 51 houses element 52 and comprises a substantially vertical intermediate wall 54 and two substantially horizontal and mutually parallel end ribs 55.

The width of the ribs 55 of each element 51 grows along axis 33 (or axis 37) from portion 27 (or portion 29) to the coupling zone defining the hinge 43. In consequence, in this coupling zone, the edges of the ribs 55 of each member 31 form an angle C (Figure 4) between portions 32 and 36 greater than angle B (in particular, equal to 140°).

With reference to Figures 5 and 6, in each portion 32 and 36, element 52 has a constant transversal cross-section along axis 33 and 37 and comprises an intermediate wall 64, parallel and spaced apart from wall 54, so as to form a tubular portion. Element 52 also comprises two end ribs 65, which overlap the inner surface 66 of ribs 55 and have respective edges 67 welded to the inner surface 66 in a manner not shown.

Still with reference to Figures 2 and 4, assembly 28 also comprises two side protection plates 70, which are substantially vertical and parallel to axis 10, joining together the side ends of plates 39 and wall 15 to protect members 31 from external objects entering sideways, and are plastically deformable to absorb energy in parallel with the other members 31. The front ends 71 of plates 70 are crossed by the ends of walls 20 and are fixed, particularly by welding, to walls 20 and 15. The rear ends 74 of plates 70 are fixed, particularly by welding, to plates 39 and to bars 42. Plates 70 also have respective horizontal weight-reducing slots 76.

With reference to Figure 3, portion 29 is reinforced by a structure 79, which is fixed to plate 11, particularly by welding, and comprises:
- two bars 80, which have a C-shaped cross-section, are fitted with horizontal internal reinforcements (not shown), are coupled to the rear face 81 of plate 11 in substantially horizontally aligned positions with the connection points of devices 30 and extend from portion 29 upwards, so as to discharge loads received from the deflector 1 onto an upper portion of plate 11 as well,
- a plurality of bars 82 which have a C-shaped cross-section, are coupled to face 81 and extend horizontally and orthogonally to axis 10,
- a plurality of vertical reinforcements 83 coupled to face 81, placed between bars 82 and coplanar with plates 70, and
- four reinforcements (not shown) coupled to the front face of portion 29 and placed at the sides of plates 39.

In the case of a relatively severe collision, as mentioned above, members 31 and plates 70 plastically deform to absorb energy. As explained above, members 31 deform in an accordion way, namely with bending around axes 45, while plates 70 deform in compression in a direction parallel to axis 10. As a consequence of the impact, wall 15 also plastically deforms, even if in a secondary manner, according to the shape of the obstacle that is hit, but tends to substantially retain the original wedge shape.

Thanks to the fact of providing two hinges 43 mutually symmetrical with respect to a longitudinal median plane, in the case of an obstacle or mass that is not centred with respect to axis 10, members 31 each deform in a manner different from the others so as to change the position of wall 15 with respect to plate 11 and, in particular, to incline wall 15 towards the side where the obstacle is present, to favour sideways removal of the obstacle from the railway track 14 towards the outside.

From experimental results, the deflector 1 has been found to be effective in different situations and with obstacles of different types of masses.

Finally, from the foregoing, it is clear that modifications and variants can be made to the described deflector 1 without leaving the scope of protection of the present invention as defined by the claims.

In particular, wall 15 could have an arched shape in plan view, instead of a wedge. In addition, the deflector 1 could be connected directly to the body 3 in the cases where elements 5 and 6 were not necessary.

Furthermore, the cross-section of wall 15 (along a vertical plane parallel to axis 10) might not be perfectly flat on the vertical: for example, it could have a frontal concavity so as to also function as a snowplough.

The members 31 of each device 30 could differ in number and/or shape from those indicated by way of example, and/or portions 32 and 36 could also plastically deform by compression along the respective axes 33 and 37, and/or axes 33, 37 and 45 could be oriented in different directions from those indicated, and/or members 31 of each device 30 might not be parallel to each other.

## Claims

1. Front carriage (2) of a train comprising a relatively rigid support structure (11) and an obstacle deflector (1); the deflector comprising:
- a front wall (15), which is substantially vertical, substantially with a wedge or arc-like shape in plan view, in use is placed in a position adjacent to the railway track, and comprises two side portions (27), and
- connection means (28) connecting said side portions (27) to said support structure (11); said connection means (28) comprising at least two connection members (31), which are plastically deformable to absorb energy during a collision and are mutually symmetrical with respect to an ideal vertical plane on which a longitudinal axis (10) of said front carriage (2) lies;
**characterized in that** said connection members (31) comprise:
- respective front portions (32) which extend from a rear face (18) of said side portions (27) along respective axes (33);
- respective rear portions (36) extending along respective axes (37) which form an angle (B) other than 180° with the axes (33) of the corresponding front portions (32), to define respective bending hinges (43) in intermediate zones between said front and rear portions (32, 36) in case of plastic deformation during the collision; said angle (B) having a concavity facing sideways towards the outside.

2. Front carriage according to claim 1, **characterized in that** said front and rear portions (32,36) are formed by elements with C-shaped cross-sections (51,52).

3. Front carriage according to claim 2, **characterized in that** said elements with C-shaped cross-sections (51,52) comprise first elements (51), one for each of said front and rear portions (32,36); each first element (51) comprising a substantially vertical intermediate wall (54) and two substantially horizontal and mutually parallel end ribs (55); the width of the ribs (55) of each first element (51) increasing along said axis (33, 37) towards the zone defining said bending hinge (43).

4. Front carriage according to claim 2 or 3, **characterized in that** said elements with C-shaped cross-sections (51,52) comprise first elements (51) and second elements (52); in each of said front and rear portions (32,36), one of said first elements (51) housing one of said second elements (52).

5. Front carriage according to claim 4, **characterised in that**, in each of said front and rear portions (32,36), said first and second elements (51,52) comprise respective intermediate walls (54,64), which are substantially vertical, are parallel and are spaced apart, so as to form a tubular portion.

6. Front carriage according to claim 5, **characterised in that**, in each of said front and rear portions (32, 36), said first and second elements (51,52) comprises respective end ribs (55,65), which are substantially horizontal, are mutually parallel and overlap each other.

7. Front carriage according to anyone of the preceding claims, **characterized in that** said front wall (15) comprises a central portion (16) placed between said connection members (31) and devoid of connections to said support structure (11).

8. Front carriage according to anyone of the preceding claims **characterized in that** the two said bending hinges (43) define substantially vertical bending axes (45).

9. Front carriage according to anyone of the preceding claims, **characterized in that** said connection means comprise two pairs of said plastically deformable members (31).

10. Front carriage according to any of the previous claims, **characterized by** comprising reinforcement means (20) coupled to the rear face (18) of said front wall (15); said reinforcement means (20) comprising mutually parallel walls transversal with respect to said rear face (18).

11. Front carriage according to any of the previous claims, **characterized in that** said connection means (28) comprise side protection plates (70), which define a barrier that protects said connection members (31) from external objects and are plastically deformable in parallel with said connection members (30).

12. Front carriage according to anyone of the preceding claims, **characterized in that** said support structure is defined by a substantially vertical plate (11) comprising a bottom portion (29) that supports said obstacle deflector (1).

13. Front carriage according to claim 11, **characterized by** comprising reinforcement means (79) coupled to the rear face (81) of said bottom portion (29) and extending upwards from said bottom portion (29) to distribute loads onto an upper portion of said substantially vertical plate (11).

## Patentansprüche

1. Frontwagen (2) eines Zuges, der eine relativ starre Tragkonstruktion (11) und einen Hindernisabweiser (1) umfasst; wobei der Abweiser Folgendes umfasst:
- eine vordere Wand (15), die im Wesentlichen senkrecht ist, im Wesentlichen mit einer keil- oder bogenartigen Form in der Draufsicht, die während der Verwendung in einer Stellung angrenzend an die Eisenbahnschiene platziert ist, und zwei Seitenabschnitte (27) umfasst, und
- Verbindungsmittel (28), welche die Seitenabschnitte (27) mit der Tragkonstruktion (11) verbinden; wobei die Verbindungsmittel (28) mindestens zwei Verbindungselemente (31) umfassen, die plastisch verformbar sind, um während eines Zusammenstoßes Energie aufzunehmen, und bezogen auf eine ideelle senkrechte Ebene, in der eine Längsachse (10) des Frontwagens (2) liegt, zueinander symmetrisch sind;
**dadurch gekennzeichnet, dass** die Verbindungsmittel (31) Folgendes umfassen:
- jeweilige vordere Abschnitte (32), die von einer hinteren Fläche (18) der Seitenabschnitte (27) aus entlang jeweiliger Achsen (33) verlaufen;
- jeweilige hintere Abschnitte (36), die entlang jeweiliger Achsen (37) verlaufen, die einen Winkel (B) abweichend von 180° mit den Achsen (33) der entsprechenden vorderen Abschnitte (32) bilden, um im Fall einer plastischen Verformung während des Zusammenstoßes jeweilige Biegescharniere (43) in Zwischenbereichen zwischen den vorderen und hinteren Abschnitten (32, 36) zu definieren; wobei der Winkel (B) eine Wölbung nach innen aufweist, die seitlich zur Außenseite zeigt.

2. Frontwagen nach Anspruch 1, **dadurch gekennzeichnet, dass** die vorderen und hinteren Abschnitte (32, 36) aus Elementen mit einem C-förmigen Querschnitt (51, 52) gebildet sind.

3. Frontwagen nach Anspruch 2, **dadurch gekennzeichnet, dass** die Elemente mit einem C-förmigen Querschnitt (51, 52) erste Elemente (51) umfassen, eines für jeden der vorderen und hinteren Abschnitte (32, 36); wobei jedes erste Element (51) eine im Wesentlichen senkrechte Zwischenwand (54) und zwei im Wesentlichen waagerechte und zueinander parallele Endrippen (55) umfasst; wobei die Breite der Rippen (55) jedes ersten Elements (51) entlang der Achse (33, 37) in Richtung des Bereichs zunimmt, der das Biegescharnier (43) definiert.

4. Frontwagen nach Anspruch 2 oder 3, **dadurch gekennzeichnet, dass** die Elemente mit einem C-förmigen Querschnitt (51, 52) erste Elemente (51) und zweite Elemente (52) umfassen; wobei in jedem der vorderen und hinteren Abschnitte (32, 36) eines der ersten Elemente (51) eines der zweiten Elemente (52) aufnimmt.

5. Frontwagen nach Anspruch 4, **dadurch gekennzeichnet, dass** in jedem der vorderen und hinteren Abschnitte (32, 36) die ersten und zweiten Elemente (51, 52) jeweilige Zwischenwände (54, 64) umfassen, die im Wesentlichen senkrecht sind, parallel und voneinander beabstandet sind, um einen röhrenförmigen Abschnitt zu bilden.

6. Frontwagen nach Anspruch 5, **dadurch gekennzeichnet, dass** in jedem der vorderen und hinteren Abschnitte (32, 36) die ersten und zweiten Elemente (51, 52) jeweilige Endrippen (55, 65) umfassen, die im Wesentlichen waagerecht sind, zueinander parallel verlaufen und einander überdecken.

7. Frontwagen nach einem der vorhergehenden Ansprüche, **dadurch gekennzeichnet, dass** die vordere Wand (15) einen mittigen Abschnitt (16) umfasst, der zwischen den Verbindungselementen (31) platziert ist und keine Verbindungen zu der Tragkonstruktion (11) aufweist.

8. Frontwagen nach einem der vorhergehenden Ansprüche, **dadurch gekennzeichnet, dass** die zwei Biegescharniere (43) im Wesentlichen senkrechte Biegeachsen (45) definieren.

9. Frontwagen nach einem der vorhergehenden Ansprüche, **dadurch gekennzeichnet, dass** die Verbindungselemente zwei Paare der plastisch verformbaren Elemente (31) umfassen.

10. Frontwagen nach einem der vorhergehenden Ansprüche, **gekennzeichnet durch** das Umfassen von Verstärkungsmitteln (20), die mit der hinteren Fläche (18) der vorderen Wand (15) verbunden sind; wobei die Verstärkungsmittel (20) zueinander parallele Wände quer zu der hinteren Fläche (18) umfassen.

11. Frontwagen nach einem der vorhergehenden Ansprüche, **dadurch gekennzeichnet, dass** die Verbindungsmittel (28) seitliche Schutzplatten (70) umfassen, die eine Sperre definieren, welche die Verbindungselemente (31) vor Gegenständen von außen schützt, und die parallel zu den Verbindungselementen (30) plastisch verformbar sind.

12. Frontwagen nach einem der vorhergehenden Ansprüche, **dadurch gekennzeichnet, dass** die Tragkonstruktion durch eine im Wesentlichen senkrechte Platte (11) definiert ist, die einen unteren Abschnitt (29) umfasst, der den Hindernisabweiser (1) trägt.

13. Frontwagen nach Anspruch 11, **gekennzeichnet durch** das Umfassen von Verstärkungsmitteln (79), die mit der hinteren Fläche (81) des unteren Abschnitts (29) verbunden sind und von dem unteren Abschnitt (29) aus nach oben verlaufen, um Lasten auf einen oberen Abschnitt der im Wesentlichen senkrechten Platte (11) zu verteilen.

## Revendications

1. Wagon avant (2) d'un train comprenant une structure de support (11) relativement rigide et un déflecteur d'obstacle (1) ; le déflecteur comprenant :
une paroi avant (15), qui est essentiellement verticale, essentiellement avec une forme de coin ou d'arc en vue de plan, qui est placée, en cours d'utilisation, dans une position adjacente à la voie de chemin de fer, et qui comprend deux parties latérales (27), et
un moyen de liaison (28) reliant lesdites parties latérales (27) à ladite structure de support (11) ; ledit moyen de liaison (28) comprenant au moins deux éléments de liaison (31), qui sont plastiquement déformables pour absorber l'énergie pendant une collision et qui sont mutuellement symétriques par rapport à un plan vertical idéal sur lequel se trouve un axe longitudinal (10) dudit wagon avant (2) ;
**caractérisé en ce que** lesdits éléments de liaison (31) comprennent :
des parties avant respectives (32) qui s'étendent depuis une face arrière (18) desdites parties latérales (27) le long d'axes respectifs (33) ;
des parties arrières respectives (36) s'étendant le long d'axes respectifs (37) qui forment un angle (B) différent de 180° avec les axes (33) des parties avant correspondantes (32), afin de définir des charnières de pliage respectives (43) dans des zones intermédiaires entre lesdites parties avant et arrière (32, 36) en cas de déformation plastique pendant la collision ; ledit angle (B) présentant une concavité orientée latéralement vers l'extérieur.

2. Wagon avant selon la revendication 1, **caractérisé en ce que** lesdites parties avant et arrière (32, 36) sont formées par des éléments avec des sections transversales (51, 52) en forme de C.

3. Wagon avant selon la revendication 2, **caractérisé en ce que** lesdits éléments avec des sections transversales (51, 52) en forme de C comprennent des premiers éléments (51), un pour chacune desdites parties avant et arrière (32, 36) ; chaque premier élément (51) comprenant une paroi intermédiaire (54) essentiellement verticale et deux nervures d'extrémité (55) essentiellement horizontales et parallèles entre elles ; la largeur des nervures (55) de chaque premier élément (51) augmentant le long dudit axe (33, 37) vers la zone définissant ladite charnière de pliage (43).

4. Wagon avant selon la revendication 2 ou 3, **caractérisé en ce que** lesdits éléments avec des sections transversales (51, 52) en forme de C comprennent des premiers éléments (51) et des deuxièmes éléments (52) ; dans chacune desdites parties avant et arrière (32, 36), l'un desdits premiers éléments (51) recevant l'un desdits deuxièmes éléments (52).

5. Wagon avant selon la revendication 4, **caractérisé en ce que**, dans chacune desdites parties avant et arrière (32, 36), lesdits premier et deuxième éléments (51, 52) comprennent des parois intermédiaires respectives (54, 64), qui sont essentiellement verticales, parallèles et espacées, de manière à former une partie tubulaire.

6. Wagon avant selon la revendication 5, **caractérisé en ce que**, dans chacune desdites parties avant et arrière (32, 36), lesdits premier et deuxième éléments (51, 52) comprennent des nervures d'extrémité respectives (55, 65), qui sont essentiellement horizontales, parallèles entre elles et qui se chevauchent l'une l'autre.

7. Wagon avant selon l'une quelconque des revendications précédentes, **caractérisé en ce que** ladite paroi avant (15) comprend une partie centrale (16) placée entre lesdits éléments de liaison (31) et dépourvue de liaisons à ladite structure de support (11).

8. Wagon avant selon l'une quelconque des revendications précédentes, **caractérisé en ce que** lesdites deux charnières de pliage (43) définissent des axes de pliage (45) essentiellement verticaux.

9. Wagon avant selon l'une quelconque des revendications précédentes, **caractérisé en ce que** ledit moyen de liaison comprend deux paires desdits éléments plastiquement déformables (31).

10. Wagon avant selon l'une des revendications précédentes, **caractérisé par** le fait de comprendre un moyen de renfort (20) couplé à la face arrière (18) de ladite paroi avant (15) ; ledit moyen de renfort (20) comprenant des parois parallèles entre elles transversales par rapport à ladite face arrière (18).

11. Wagon avant selon l'une des revendications précédentes, **caractérisé en ce que** ledit moyen de liaison (28) comprend des plaques de protection latérales (70), qui définissent une barrière qui protège lesdits éléments de liaison (31) des objets extérieurs et sont plastiquement déformables en parallèle avec lesdits éléments de liaison (30).

12. Wagon avant selon l'une quelconque des revendications précédentes, **caractérisé en ce que** ladite structure de support est définie par une plaque essentiellement verticale (11) comprenant une partie inférieure (29) qui supporte ledit déflecteur d'obstacle (1).

13. Wagon avant selon la revendication 11, **caractérisé par** le fait de comprendre un moyen de renfort (79) couplé à la face arrière (81) de ladite partie inférieure (29) et s'étendant vers le haut depuis ladite partie inférieure (29) pour répartir des charges sur une partie supérieure de ladite plaque essentiellement verticale (11).
